(19) Europäisches Patentamt / European Patent Office / Office européen des brevets

(11) **EP 3 961 554 B1**

(12) **EUROPEAN PATENT SPECIFICATION**

(45) Date of publication and mention
of the grant of the patent:
**04.06.2025 Bulletin 2025/23**

(21) Application number: **21771646.3**

(22) Date of filing: **08.02.2021**

(51) International Patent Classification (IPC):
***G01N 21/952*** (2006.01)    ***G01N 21/88*** (2006.01)
***G06T 7/00*** (2017.01)

(52) Cooperative Patent Classification (CPC):
**G01N 21/952; G01N 21/8851; G06T 7/0004;**
G01N 2021/8854; G01N 2201/10

(86) International application number:
**PCT/CN2021/076080**

(87) International publication number:
**WO 2021/185009 (23.09.2021 Gazette 2021/38)**

(54) **AUTOMATIC DETECTION DEVICE AND DETECTION METHOD FOR ROLLER SURFACE OF ROLLER PRESS**

AUTOMATISCHE DETEKTIONSVORRICHTUNG UND DETEKTIONSVERFAHREN FÜR DIE WALZENOBERFLÄCHE EINER WALZENPRESSE

DISPOSITIF DE DÉTECTION AUTOMATIQUE ET PROCÉDÉ DE DÉTECTION POUR SURFACE DE ROULEAU D'UNE PRESSE À ROULEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2020 CN 202010203566**

(43) Date of publication of application:
**02.03.2022 Bulletin 2022/09**

(73) Proprietor: **CNBM (Hefei) Powder Technology
Equipment Co., Ltd.
Anhui 230051 (CN)**

(72) Inventors:
 • **WANG, Qianqian
  Hefei, Anhui 230002 (CN)**
 • **WANG, Zhiling
  Hefei, Anhui 230002 (CN)**
 • **XU, Ruikang
  Hefei, Anhui 230002 (CN)**
 • **GAO, Lin
  Hefei, Anhui 230002 (CN)**
 • **ZHANG, Wenjin
  Hefei, Anhui 230002 (CN)**
 • **CHEN, Zhonghua
  Hefei, Anhui 230002 (CN)**
 • **HUANG, He
  Hefei, Anhui 230002 (CN)**
 • **WU, Xianbin
  Hefei, Anhui 230002 (CN)**

(74) Representative: **Dantz, Jan Henning et al
Loesenbeck - Specht - Dantz
Patent- und Rechtsanwälte
Am Zwinger 2
33602 Bielefeld (DE)**

(56) References cited:
WO-A1-2018/204205    CN-A- 106 814 072
CN-A- 110 288 545    CN-A- 110 653 341
CN-A- 110 660 093    CN-A- 111 239 144
CN-U- 212 008 354

## Description

Technical field

The present invention relates to the technical field of industrial automation detection, and in particular to an automatic detection device and detection method for a roller surface of a roller press.

Technical background

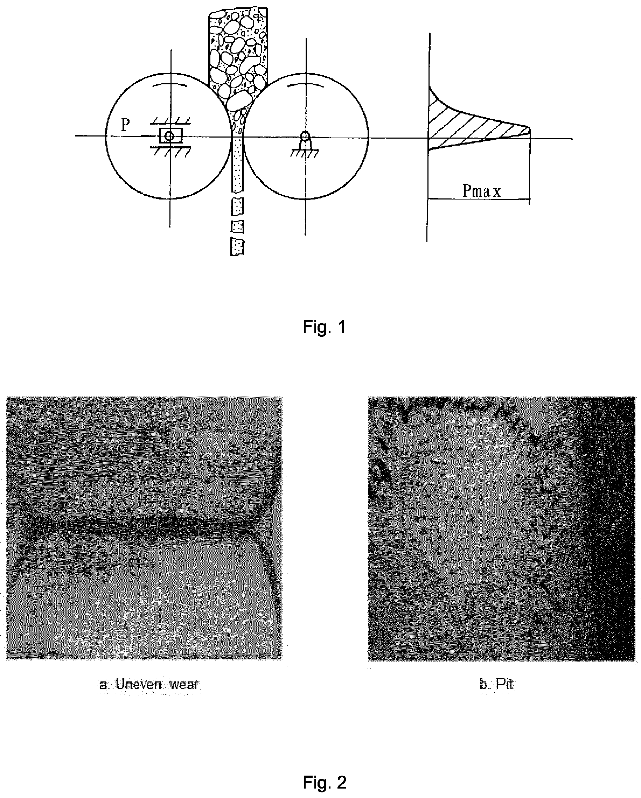

Roller presses are a kind of large-scale engineering equipment used to squeeze and crush materials, and are widely used in cement, mining, chemical and other industries. A working principle thereof is as shown in Fig. 1: materials are feed from above the equipment, and the materials are crushed under high pressure by means of two horizontally installed and synchronously rotating squeezing rollers. The squeezing force received by the material layer in the process of being forced to move downward gradually increases to a sufficient level, until it is crushed and squeezed into a dense cake to be discharged from under the rollers.

Due to the high crushing pressure of the roller press, the equipment will also be simultaneously worn during efficient crushing. Fig. 2 shows two common defects of the roller surface of the roller press: a) uneven wear of the roller surface, wherein due to the edge effect of the roller press, namely, fast wear in the middle of the roller surface and slow wear on both sides, after long-term operation, the phenomenon of depression in the middle of the roller surface appears, making it impossible to extend the service life of the roller surface by adjusting the roll gap; and b) roller surface pits, wherein when metal foreign objects such as steel ball hammers enter the roller press, it is easy to cause partial damage to the roller surface, such as pits on the roller surface, and if not found and treated in time, the pits will quickly expand and damage the entire roller surface, resulting in overhaul or scrapping of the roller surface.

A pair of rollers of the roller press are key parts of the roller press, and their wear condition directly determines the quality of the product. On the one hand, the equipment operation rate of the roller press is high, the time required to perform a system overhaul of the rollers is tight and the workload is heavy. On the other hand, the roller surface is made of special materials and special processes, and the cost is high. If defects cannot be found and repaired in time, later defects will quickly expand, and the maintenance costs will be very high. At present, the detection and maintenance of the roller surface of the roller press in the market mainly relies on manual visual observation of the roller surface to find problems, and there is no actual detection and maintenance equipment for the roller surface of the roller press. The defects of the traditional manual method of overhauling the roller surface of the roller press are mainly reflected in the following points: a) the monitoring of the roller surface is not detailed enough. For detecting the defects of the roller surface of the roller press only by naked eyes, some small defects are often difficult to detect and easy to miss. Once a small defect is not found, it is easy to expand into a large defect. b) Since the cost of repairing the roll surface is mainly the cost of welding materials, and human eyes cannot quantitatively know how much welding materials need to be used, the cost of maintenance and transportation increases. c) There is a lack of digital records for the entire life cycle of the roller surface. Human eyes can only qualitatively check the wear of the roller surface when observing the defects of the roller surface. Without quantitative data support, it cannot accurately record the changes of the roller surface wear over time. Therefore, it cannot provide quantitative data support for product process analysis. d) The automation degree is low. Manual inspection has a large workload, low efficiency, and questionable timeliness. Moreover, everyone's observation conclusion on the roller surface may not be the same, and the observation effect is unstable.

Chinese invention patent No. CN110288545A proposes an online three-dimensional imaging device and method for a roller surface of a roller press. Patent No. CN110288545A uses a binocular camera to detect the topography of the roller surface. The key steps are as follows: partial point cloud reconstruction: a three-dimensional point cloud of the roller surface in a single line laser irradiation region is restored through images of the roller surface irradiated by a pair of laser line; and point cloud splicing: the binocular camera moves left and right on the lead screw at a specified speed and captures image pairs of the roller surface at a certain frame rate. To restore the three-dimensional coordinates of a single line laser for each pair of images, multiple line-shaped point clouds need to be spliced into a surface. Secondly, when a reconstruction algorithm is reconstructed, the roller surface rotates at a certain angular velocity, and it is necessary to splice multiple pieces of scan data into one piece of complete roller surface data. In the roller surface reconstruction method of patent No. CN110288545A, some aspects can be further optimized: a) In the mechanical structure, the inside of the roller press is in a high dust environment, and the lead screw, the binocular camera, and the laser are directly exposed to the dust environment, and without dust-proof measures, the mechanism will soon be covered with dust, resulting in photographing failure. b) In the detection principle, according to the description of patent No. CN110288545A, each pair of images can restore the three-dimensional coordinates of a single laser line irradiation region, and if the complete roller surface needs to be restored, then it is necessary to splice the detection regions of multiple laser lines. Moreover, how to splice between the detection regions of each laser line is the key. According to the description of patent No. CN110288545A, while the binocular camera captures the image of the roller surface at a certain frame rate, the binocular camera moves along the axial direction of the roller surface, and the roller surface rotates along the circumferential direction. There are the following difficulties: Firstly, the photographing frame rates of most of the binocular cameras are generally below 100 fps, even for the ultra-high-speed industrial camera, the photographing frame rate is only about 200 fps, and there is a contradiction between the camera photographing frame rate and the resolution. The typical value of the linear velocity of the roller surface of the roller press is about 1.5 m/s. At this frame rate, there may be smear in the image when photographing the roller surface at close range, which has a greater impact on the binocular recognition effect. Secondly, there are both radial and circumferential relative movement between the binocular camera and the roller surface of the roller press. Theoretically, the motion trajectory of the laser line on the surface of the roller press forms a spiral surface, which does not completely contain the information of the entire roller surface. Thirdly, when splicing point clouds, the relative displacement relationship between the laser lines on every two frames of images must be accurately known before splicing, otherwise the splicing cannot be performed. This has great difficulties in technical realization. Patent No. CN110288545A does not describe the realization process of splicing algorithm in detail. c) In the realization cost, as described above in "Thirdly" in b), multiple laser line detection regions need to be spliced together to form a complete roller surface. Since the area of each laser line detection region is small, multiple images need to be captured to form a complete roller surface. Each image needs to perform actions such as distortion correction, filtering, threshold segmentation, and three-dimensional coordinate calculation. The calculation cost is high, and the real-time performance is poor.

Summary of the invention

The present invention proposes an automatic detection device and detection method for a roller surface of a roller press, which can solve the technical problem of low detection accuracy of the existing detection device.

In order to achieve the above objective, the present invention adopts the following technical solution: An automatic detection device for a roller surface of a roller press, comprising:

a photographing control module, a motion execution module and a data processing module, wherein the photographing control module comprises an industrial linear array camera, a motion controller and a local computer; the industrial linear array camera is provided above the roller surface of the roller press; and the local computer is in communication connection with the industrial linear array camera, and is configured to be used to set photographing parameters of the industrial linear array camera and receive photos captured by it;

wherein:

the motion execution module comprises a lead screw, a lead screw motor, a ball and a camera dust-proof box;

the lead screw is installed on a lead screw base by bearing fit, the ball is installed on the lead screw, and the ball can move linearly back and forth along the lead screw;

the lead screw motor is fixedly connected to the lead screw through a lead screw coupling, a camera support plate is fixedly connected below the ball, the bottom of the camera support plate is fixedly connected to the camera dust-proof box, the interior of the camera dust-proof box is provided with an electric push rod, the electric push rod is rotatably connected to inner sides of upper and lower end surfaces of the camera dust-proof box, the electric push rod is retractable, and opening and closing of the lower end surface of the camera dust-proof box can be controlled by controlling extension and contraction of the electric push rod;

the industrial linear array camera is fixed inside the camera dust-proof box, the industrial linear array camera is in communication connection with the motion controller, and the industrial linear array camera is configured to execute a photographing task after receiving a photographing signal sent out by the motion controller; and send captured photos to the local computer after finishing photographing; and

the local computer is configured to send the captured photos and photographing parameters to the data processing module, and the data processing module is configured to decompose, crop, splice, and correct original photo data sent by the local computer, extract depth information according to image gray values, generate cloud data of detected roller surface points in a prescribed format and generate cloud data of detected roller surface points in a prescribed format and generate two-dimensional and three-dimensional models of the roller surface; and the data processing module is further configured to detect defects of the roller surface, compare them with its historical data to obtain wear speeds and defect changes of the roller surface, store detection results and report them to a user.

Further, the interior of the camera dust-proof box is further provided with a camera dust-proof cover and a camera dust-proof cover bearing seat;

the camera dust-proof cover bearing seat is fixedly connected to the lower end surface of the camera dust-proof box, and the industrial linear array camera is fixedly connected to the camera dust-proof cover bearing seat through an industrial camera support shaft;

the camera dust-proof cover is a transparent cylindrical cover, of which two ends are installed on the industrial camera support shaft by bearing fit, an inner side of a bearing is fixedly connected to the industrial camera support shaft, an outer side of the bearing is fixedly connected to the camera dust-proof cover, and the camera dust-proof cover can be rotated along the industrial camera support shaft; and

an inner side wall of the camera dust-proof box is fixedly connected to a brush, a length of the brush is equal to a length of the camera dust-proof cover, the brush is in contact with an outer side wall of the camera dust-proof cover, and when the camera dust-proof cover rotates around the industrial camera support shaft, the brush sweeps away floating dust attached to the outer side wall of the camera dust-proof cover.

Further, one end of the camera dust-proof cover is fixedly connected to a large pulley;

a dust-proof cover motor is fixedly connected to an inner side of the lower end surface of the camera dust-proof box, its output shaft is fixedly connected to a small pulley, and a synchronous belt is connected to the large pulley and the small pulley; and

the synchronous belt is driven by the dust-proof cover motor to rotate, thereby driving the camera dust-proof cover to rotate.

Further, the photographing control module further comprises a displacement sensor, and a draw-wire displacement sensor is selected as the displacement sensor; and the displacement sensor is in communication connection with the motion controller; and one end of the displacement sensor is fixed on the ball, and the other end is fixed on the lead screw base, so as to measure a displacement of the ball, realize negative feedback control of the displacement of the ball, and improve realization accuracy of displacement control of the ball.

Further, an organ cover is provided on the outside of the lead screw;
the organ cover is divided into two parts, one end of each part is fixedly connected to two ends of the lead screw base, and the other end is fixed to two ends of the camera support plate, thereby completely wrapping the lead screw to prevent external dust pollution.

Further, the automatic detection device further comprises a cable drag;

the lead screw bearing seat is fixedly connected to a support frame; and

one end of the cable drag is fixedly connected to the support frame, and the other end is fixed to the camera dust-proof box, and a cable of electrical equipment passes therethrough to protect and regulate cable installation.

Further, the photographing control module specifically comprises a first limit switch, a second limit switch, a roller proximity stop, a roller proximity switch, a photographing trigger switch, the industrial linear array camera, the motion controller, the local computer, a power supply, and an electrical box;

the first limit switch and the second limit switch are fixedly connected to both ends of the lead screw base so as to limit a movement range of the camera dust-proof box;
the roller proximity stop is fixedly connected to a roller of the roller press, and rotates with the roller;
the roller proximity switch is fixedly connected to a frame of the roller press, and when the roller proximity stop rotates to a detection area of the roller proximity switch, the roller proximity switch sends out a proximity signal;
the industrial linear array camera is installed on the industrial camera support shaft and is wrapped by the camera dust-proof cover, and the camera dust-proof cover is transparent, which does not affect photographing of the industrial linear array camera;
the electrical box is fixed on the frame of the roller press; and the photographing trigger switch, the motion controller, the local computer, and the power supply are installed inside the electrical box;
the trigger photographing switch is configured to trigger a roller surface detection program to start detection when manually pressed; and the motion controller is separately in communication connection with the lead screw motor, the dust-proof cover motor, the electric push rod, the displacement sensor, the first limit switch, the second limit switch, the roller proximity switch, and the industrial linear array camera;
the local computer is connected to a data line and a control line of the industrial linear array camera, and is configured to be used to set the photographing parameters of the industrial linear array camera and receive the photos captured by it; and the power supply supplies power to a system.

Further, the data processing module is a server, and data is transmitted between it and the local computer via Ethernet;

data processing software is installed in the data processing module, and can be specifically divided into two subsystems: an original image processing system and an operation management system;

wherein the original image processing system is configured to process original roller surface image data sent by the local computer, perform preprocessing, cropping and splicing on it, and calculate the roller surface point cloud data;

the operation management system is configured to perform modeling according to the roller surface point cloud data, and detects roller surface defects and wear; and

the operation management system is configured to classify and manage different roller surfaces according to manufacturers, roller surface types, and ID numbers of industrial linear array cameras used for detection, saves the roller surface detection results in a local database and reports the detection results to the user.

On the other hand, the present invention further discloses an automatic detection method for a roller surface of a roller press, which is using the above-mentioned automatic detection device for the roller surface of the roller press, the automatic detection method comprising the following steps:

S100, camera calibration; comprising

calibrating the industrial linear array camera, and establishing a conversion relationship between a pixel gray value and a real-world displacement;
establishing a world coordinate system of a roller surface inspection system, and converting a result captured by the industrial linear array camera into roller surface point cloud data expressed in this coordinate system;
an origin of the established world coordinate system is a starting position before the industrial linear array camera performs photographing, an X direction is a direction along an axis of a roller, a Z direction is a laser line photographing direction of the industrial linear array camera, and a Y direction is determined by a right-hand spiral law rule, namely $\vec{Y} = \vec{Z} \times \vec{X}$;

S200, comprising powering on a system, and rollers of the roller press starting to rotate:

a user setting parameters in the photographing control module;

the user setting photographing parameters of the industrial linear array camera in the local computer;

the user establishing a unique database for each roller surface in the operation management system according to information of groups, manufacturers and equipment types, wherein for a specific roller surface, it only needs to set the photographing parameters once and build a database once, and there is no need to repeat them for subsequent photographing; and after the setting is completed, the user pressing the photographing trigger switch, and the system starting to run an automatic roller surface detection program;

S300, comprising

the motion controller first initializing a program to check whether a lid of the camera dust-proof box has been closed, and whether the ball has returned to a starting point, and if not completed, then executing actions of the camera dust-proof box closing the lid and the ball returning to the starting point;
then the motion controller sequentially executing lid opening of the camera dust-proof box and dust sweeping of the camera dust-proof cover;
the motion controller sending a photographing command;

S400, comprising

the industrial linear array camera executing a photographing task after receiving a photographing signal sent by the motion controller;
after the industrial linear array camera has finished photographing, sending captured photos to the local computer;

S500, comprising
repeatedly executing actions of the ball running to a designated photographing position and the motion controller sending the photographing command in S300 and S400, until the number of captured photos is equal to the number of shots set by the user in S200;

S600, comprising
the motion controller sending commands to drive the ball back to the starting point and to drive the camera dust-proof box to close the lid;

S700, comprising
the local computer sending the captured photos and photographing parameters to an original image processing system;

S800, comprising

the original image processing system decomposing, cropping, splicing, and correcting original photo data sent by the local computer, extracting depth information according to image gray values, and generating cloud data of detected roller surface points in a prescribed format;

the original image processing system sending the generated point cloud data of the roller surface to a specific path of the database established by the user in the operation management system in S200;

S900, comprising

the operation management system analyzing the received point cloud data, generating two-dimensional and three-dimensional models of the roller surface, detecting its defects, comparing them with its historical data to obtain wear speeds and defect changes of the roller surface, storing detection results and reporting them to the user; and

S1000, comprising

when the user does not need to detect the roller surface again, powering off the system; and conversely, if he needs to continue to detect the roller surface, then repeating S200 to S900 until the roller surface does not need to be detected again.

Further, the motion controller executing the photographing command in the S300 specifically comprises:

after the motion controller confirms that the rollers of the roller press have a stable running cycle, driving the ball to run to a designated photographing position, when the ball runs to the designated position and then the roller proximity stop approaches the roller proximity switch again, the motion controller monitoring a proximity signal sent by the roller proximity switch, and at this time, the motion controller sending a photographing command to the industrial linear array camera.

In summary, the automatic detection device and detection method for the roller surface of the roller press of the present invention are directed to the defects such as low degree of automation, low detection accuracy, and no quantitative data support in manual detection of the roller surface of the roller press. The automatic detection device for the roller surface of the roller press obtains partial photos of the roller surface by an industrial linear array camera scanning the roller surface, and moves the photographing position of the industrial linear array camera to obtain multiple partial photos of the roller surface, and the partial roll surface photos cropped and spliced are to obtain the point cloud data of the complete roll surface. The two-dimensional and three-dimensional models of the roller surface are established according to the point cloud data, roller surface defects are detected, and the database system is established to manage different roller surfaces. The mechanism of the present invention is provided with a dust-proof device, which has good stability and reliability. The user sets different industrial line laser scanning photographing parameters to realize the detection of different roller surface types with good scalability.

It can be seen from the above technical solution that the automatic detection device for the roller surface of the roller press of the present invention has the following beneficial effects:

1) It has a high degree of automation and high detection accuracy. The automatic detection device and method for the roller surface of the roller press of the present invention uses an industrial line laser camera to detect the roller surface, and the highest detection accuracy can reach 0.6 mm, so that small defects on the roller surface can also be detected, and thereby maintenance can be done in advance to avoid greater losses. The process of detecting the roller surface does not need to open the end lid of the roller press. Without disassembly, the detection is started with one button, having a high degree of automation. Detection reports are automatically generated and the results are stored, reducing the burden of manual detection. The detection results are intuitive, the roller surface detection data is digitized and traceable, providing quantitative data support for process analysis.

2) The detection has good real-time performance and high efficiency. The photographing solution adopted by the present invention is fixed-point photographing by an industrial camera. The rollers of the roller press rotate to form a relative movement with respect to the photographing line of the industrial linear array camera. Therefore, the trajectory of the laser line emitted by the industrial camera moving on the roller surface is a cylindrical surface parallel to the axis of the roller, that is, a photo includes the information of the partial cylindrical surface on the roller surface. A photo may not include information of a complete roller surface, but the actual measurement can cover the largest roller surface in the market with only 4 photos at most. The typical photographing frame rate of the industrial linear array camera 206 is 1700 frames per second, and the typical time to capture a roller surface photo is only about 3 seconds, and the detection process has good real-time performance. The cropping and stitching of 2 or more photos is very simple. Firstly, the axial stitching process is simple, the displacement data of movement of the ball 104 is converted into pixel displacement according to the calibration relationship of the camera, and the photos are cropped and spliced in sequence according to the photographing order. Secondly, capturing of each photo is triggered according to the signal of the roller proximity switch 204. Therefore, the starting point of each captured photo is the same position in the circumferential direction of the roller, that is, the natural alignment of several photos in the circumferential direction of the roller does not need to be cropped. Thirdly, the photos captured by the industrial linear array camera 206 include depth information themselves, and their gray values represent the depth information. Therefore, it is very simple and fast to calculate the three-dimensional point cloud data of the roller surface. In summary, the above-designed photographing solution makes the process of cropping and stitching photos very convenient and efficient.

3) It has good scalability and high compatibility. The operation management system 302 included in the roller surface monitoring system of the present invention digitally stores the detection results, and its detection results can be easily transmitted to the outside and connected to other intelligent management platforms of the factory to realize convenient management expansion. It is very convenient for the user to use and set up the system, and it only needs to change the photographing parameters to adapt to various types of rollers on the market, having good compatibility.

4) It has good stability and high reliability. The industrial linear array camera uses the principle of triangulation to measure distances. The camera is integrated with a transmitter and a receiver. It is small in size and low in power consumption. It is widely used in industrial sites, and its stability and reliability have been tested in industrial site practices. The solution used in the present invention uses a dust-proof box and a dust-proof cover to double-seal the industrial camera, and uses an organ cover to seal the ball lead screw, avoiding the damage to the equipment by the high dust environment inside the roller press, and further improving the stability and reliability of the equipment.

Brief description of the drawings

Fig. 1 is a diagram of a working principle of a roller press;

Fig. 2 is a state diagram of a wear form of a roller surface of a roller press;

Fig. 3 is a system block diagram of the present invention;

Fig. 4 is a structural schematic diagram of the present invention;

Fig. 5 is a structural schematic diagram of a motion execution module of the present invention;

Fig. 6 is a structural schematic diagram of a camera dust-proof box of the present invention;

Fig. 7 is a flow chart of detecting a roller surface of the present invention;

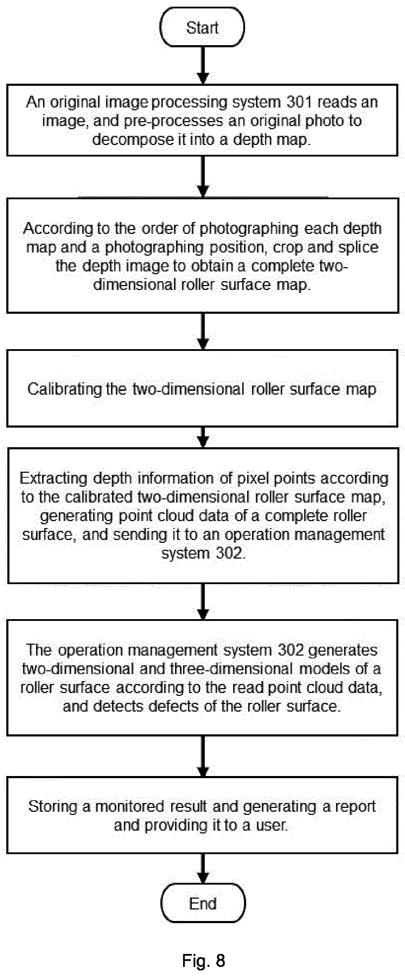

Fig. 8 is a flow chart for image processing of the present invention;

Fig. 9 is a depth Z diagram of a roller surface of an embodiment of the present invention;

Fig. 10 is a Z diagram of a final roller surface of an embodiment of the present invention; and

Fig. 11 is a 3D schematic diagram of a roller surface generated by an operation management system of an embodiment of the present invention according to roller surface point cloud data.

Detailed description of the embodiments

In order to make objectives, technical solutions and advantages of the embodiments of the present invention more clear, the technical solutions in the embodiments of the present invention will be clearly and completely described below in conjunction with the drawings in the embodiments of the present invention. Obviously, the described embodiments are a part of the embodiments of the present invention, not all of the embodiments.

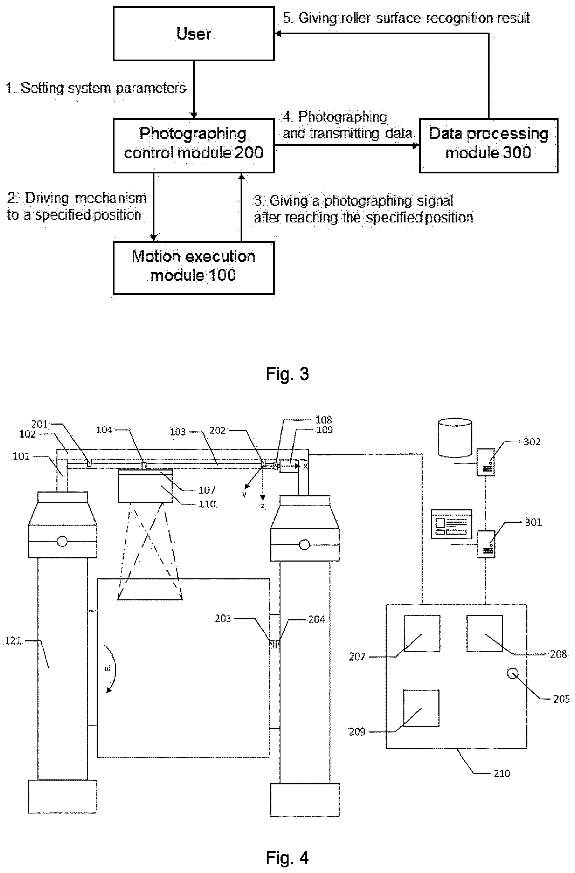

As shown in Figs. 3 and 4, an automatic detection device for a roller surface of a roller press in this embodiment mainly includes three major components: a motion execution module 100, a photographing control module 200, and a data processing module 300.

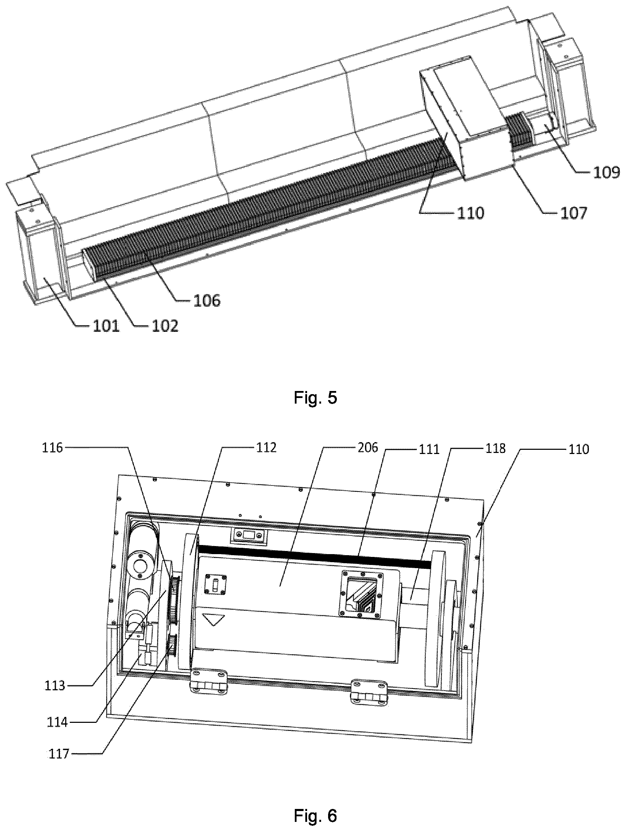

As shown in Figs. 4, 5 and 6:

The motion execution module 100 includes the following components: a support frame 101, a lead screw base 102, a lead screw 103, a ball 104, a cable drag 105, an organ cover 106, a camera support plate 107, a lead screw coupling 108, a lead screw motor 109, a camera dust-proof box 110, a brush 111, a camera dust-proof cover 112, a camera dust-proof cover bearing seat 113, a dust-proof cover motor 114, a synchronous belt 115, a large pulley 116, a small pulley 117, an industrial camera support shaft 118, an electric push rod, a displacement sensor 120, and a roller press 121. The lead screw base 102 is fixedly connected to the support frame 101, and the lead screw 103 is installed on the lead screw base 102 by bearing fit. The ball 104 is installed on the lead screw 103 by threaded fit, and can move linearly back and forth along the lead screw 103. The lead screw motor 109 is fixedly connected to the lead screw 103 through the lead screw coupling 108. A camera support plate 107 is fixedly connected above the ball 104, and an outer side of a lower end surface of the camera dust-proof box 110 is fixedly connected to the camera support plate 107. An inner side of the lower end surface of the camera dust-proof box 110 is rotatably connected to one end of the electric push rod, and an upper end surface is rotatably connected to the other end of the electric push rod. The opening and closing of the upper end surface of the camera dust-proof box 110 can be controlled by controlling the extension and contraction of the electric push rod. An inner side wall of the camera dust-proof box 110 is fixedly connected to the brush 111, a length of the brush 111 is equivalent to the camera dust-proof cover 112, and the brush 111 is in contact with an outer side wall of the camera dust-proof cover 112. The camera dust-proof cover bearing seat 113 is fixedly connected to the lower end surface of the camera dust-proof box 110, and the industrial camera support shaft 118 is fixedly connected to the camera dust-proof cover bearing seat 113. The camera dust-proof cover 112 is a transparent cylindrical cover, and both ends are installed on the industrial camera support shaft 118 by bearing fit. An inner side of a bearing is fixedly connected to the industrial camera support shaft 118 and remains stationary. An outer side of the bearing is fixedly connected to the camera dust-proof cover 112, so that the camera dust-proof cover 112 can rotate along the industrial camera support shaft 118. One end of the camera dust-proof cover 112 is fixedly connected to the large pulley 116. The dust-proof cover motor 114 is fixedly connected to the inner side of the lower end surface of the camera dust-proof box 110, its output shaft is fixedly connected to the small pulley 117, and the synchronous belt 115 is connected to the large pulley 116 and the small pulley 117. The dust-proof cover motor 114 drives the synchronous belt 115 to rotate, thereby driving the camera dust-proof cover 112 to rotate, and the brush 111 sweeps away floating dust attached to the outer side wall of the camera dust-proof cover 112. The displacement sensor 120 is a preferably added component. For example, a high-precision draw-wire displacement sensor is selected. One end is fixed on the ball 104, and the other end is fixed on the lead screw base 102 to measure a displacement of the ball 104, realizing negative feedback control of the displacement of the ball 104, and improving the realization accuracy of the displacement control of the ball 104. The organ cover 106 is divided into two parts, one end of each part is fixedly connected to two ends of the lead screw base 102, and the other end is fixed to two ends of the camera support plate 107, thereby completely wrapping the lead screw 103 to prevent external dust pollution. One end of the cable drag 105 is fixedly connected to the support frame 101, and the other end is fixed to the camera dust-proof box 110. A cable of electrical equipment passes therethrough to protect and regulate cable installation.

The photographing control module 200 includes the following components: a first limit switch 201, a second limit switch 202, a roller proximity stop 203, a roller proximity switch 204, a photographing trigger switch 205, an industrial linear array camera 206, a motion controller 207 (preferably, a PLC), a local computer 208 (preferably, an industrial computer), a power supply 209, and an electrical box 210. The first limit switch 201 and the second limit switch 202 are fixedly connected to both ends of the lead screw base 102 to limit the movement range of the camera dust-proof box 110. The roller approaching block 203 is fixedly connected to the roller of the roller press, and rotates with the roller. The roller proximity switch 204 is fixedly connected to a frame of the roller press. When the roller proximity stop 203 rotates to a detection area of the roller proximity switch 204, the roller proximity switch 204 sends out a proximity signal. The industrial linear array camera 206 is installed on the industrial camera support shaft 118 and is wrapped by the camera dust-proof cover 112. The camera dust-proof cover 112 is transparent, which does not affect photographing of the industrial linear array camera 206. The electrical box 210 is fixed on the frame of the roller press 121. The photographing trigger switch 205, the motion controller 207, the local computer 208, and the power supply 209 are installed inside the electrical box 210. The trigger photographing switch 205 is used to trigger the roller surface detection program to start detection when manually pressed. The motion controller 207 is preferably a PLC controller, and is connected to the lead screw motor 109, the dust-proof cover motor 114, the electric push rod, the displacement sensor 120, the first limit switch 201, the second limit switch 202, the roller proximity switch 204, and a control line or data line of the industrial linear array camera 206. The local computer 208 is connected to the data line and the control line of the industrial linear array camera 206, and is used to set the photographing parameters of the industrial linear array camera 206 and receive photos captured by it. The power supply 209 supplies power to the system.

The data processing module 300 is a server, and data is transmitted between it and the local computer 208 via Ethernet. Data processing software is installed in the data processing module 300, and can be specifically divided into two subsystems: an original image processing system 301 and an operation management system 302. The original image processing system 301 is used to process original roller surface image data sent by the local computer 208, perform preprocessing, cropping and splicing on it, and calculate roller surface point cloud data. The operation management system 302 performs modeling according to the roller surface point cloud data, and detects roller surface defects and wear. The operation management system 302 can classify and manage different roller surfaces according to manufacturers, roller surface types, ID numbers of industrial linear array cameras 206 used for detection and so on, saves the roller surface detection results in a local database and reports the detection results to users.

At the same time, a detection method corresponding to the roller surface defect recognition device of the roller press according to the embodiment of the present invention is performed according to the following steps:

S100: Camera calibration. The industrial linear array camera 206 is calibrated, and a conversion relationship between a pixel gray value and a real-world displacement is established, namely, a homography matrix of the industrial linear array camera 206. The calibration of the industrial linear array camera 206 is performed by using a calibration block whose size is accurately known, and has nothing to do with the size of the roller press and its related components. The calibration of the industrial linear array camera 206 only needs to be done once, and there is no need to calibrate it again for subsequent photographing. A world coordinate system of a roller surface inspection system is established, and a result captured by the industrial linear array camera 206 is converted into roller surface point cloud data expressed in this coordinate system. An origin of the established world coordinate system is a starting position before the industrial linear array camera 206 performs photographing, an X direction is a direction along an axis of a roller, a Z direction is a laser line photographing direction of the industrial linear array camera 206, and a Y direction is determined by a right-hand spiral law rule, namely $\vec{Y} = \vec{Z} \times \vec{X}$.

S200: The system is powered on, and the roller of the roller press 121 starts to rotate. A user sets parameters in the photographing control module 200. The user sets the photographing parameters of the industrial linear array camera 206 in the local computer 208, including parameters such as the frame rate captured by the industrial linear array camera 206, the number of photos captured, the number of frames of a single photo captured, and the exposure time. The user establishes a unique database for each roller surface in the operation management system 302 according to information such as groups, manufacturers, and equipment types. For a specific roller surface, it only needs to set the photographing parameters once and build a database once, and there is no need to repeat them for subsequent photographing. After the setting is completed, the user presses the photographing trigger switch 205, and the system starts to run an automatic roller surface detection program.

S300: The motion controller 207 first initializes a program to check whether a lid of the camera dust-proof box 110 has been closed, and whether the ball 104 has returned to a starting point, and if not completed, then executes actions of the camera dust-proof box 110 closing the lid and the ball 104 returning to the starting point. Then, the motion controller 207 sequentially executes lid opening of the camera dust-proof box 110 and dust sweeping of the camera dust-proof cover 112. After the motion controller 207 confirms that the rollers of the roller press 121 have a stable running cycle, it drives the ball 104 to run to a designated photographing position, when the ball 104 runs to the designated position and then the roller proximity stop 203 approaches the roller proximity switch 204 again, the motion controller 207 monitors a proximity signal sent by the roller proximity switch 204, and at this time, the motion controller 207 sends a photographing command to the industrial linear array camera 206.

S400: The industrial linear array camera 206 executes a photographing task after receiving a photographing signal sent by the motion controller 207. The number of frames of the captured photo is equal to the number of frames captured by a single shot set in S200. Theoretically, the number of frames captured by a single shot is a roller running period multiplied by the camera's photographing frame rate. The information included in a single photo is exactly a cylindrical surface of a part of the roller surface. After the industrial linear array camera 206 has finished photographing, it sends the captured photo to the local computer 208.

S500: Repeatedly execute actions of the ball 104 running to a designated photographing position and the motion controller 207 sending the photographing command in S300 and S400, until the number of captured photos is equal to the number of photos set by the user in S200.

S600: The motion controller 207 sends commands to drive the ball 104 back to the starting point and to drive the camera dust-proof box 110 to close the lid.

S700: The local computer 208 sends the captured photos and photographing parameters to the original image processing system 301.

S800: The original image processing system 301 decomposes, crops, splices, and corrects original photo data sent by the local computer 208, extracts depth information according to image gray values, and generates cloud data of detected roller surface points in a prescribed format. The original image processing system 301 sends the generated point cloud data of the roller surface to a specific path of the database established by the user in the operation management system 302 in S200.

S900: The operation management system 302 analyzes the received point cloud data, generates two-dimensional and three-dimensional models of the roller surface, detects its defects, compares them with its historical data to obtain a wear speed and defect changes of the roller surface, stores detection results and reports them to the user.

S1000: When the user does not need to detect the roller surface, the system power is turned off. Conversely, if he needs to continue to detect the roller surface, repeat S200-S900 are repeatedly executed.

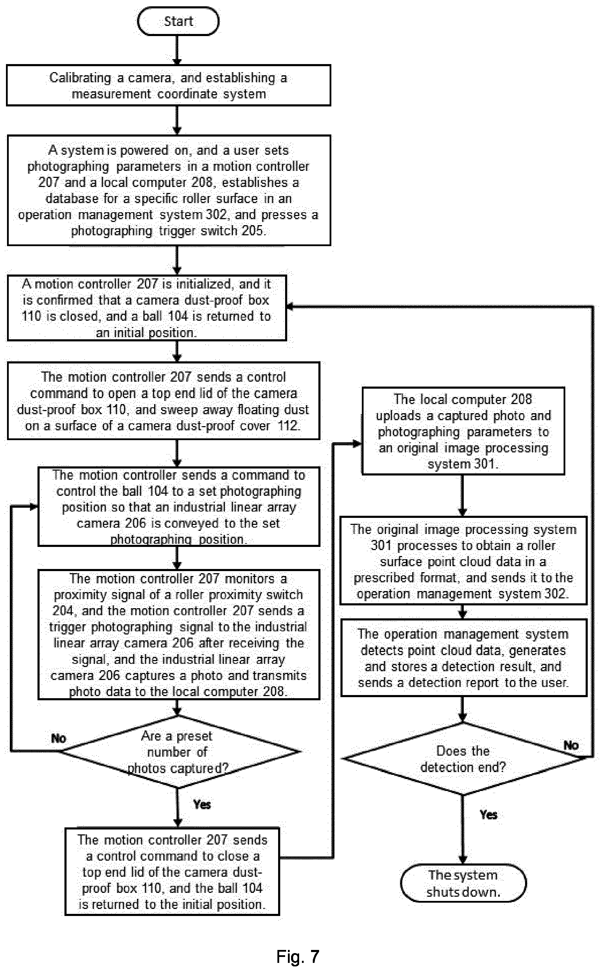

The roller surface detection process is as shown in Fig. 7. A specific example is given below in conjunction with the drawings:
The implementation process of the present invention is illustrated by taking the detection of a roller surface of a roller with a diameter of 1200 mm and an axial length of the roller surface of 500 mm as an example. An experimental environment for detection has been built.

Step 1: The industrial linear array camera 206 is calibrated, and a conversion relationship between a pixel gray value and a real-world displacement is established, namely, a homography matrix of the industrial linear array camera 206. The calibration of the industrial linear array camera 206 is performed by using a calibration block whose size is accurately known, and has nothing to do with the size of the roller press and its related components. The calibration of the industrial linear array camera 206 only needs to be done once, and there is no need to calibrate it again for subsequent photographing. A world coordinate system of a roller surface inspection system is established, and a result captured by the industrial linear array camera 206 is converted into roller surface point cloud data expressed in this coordinate system. An origin of the established world coordinate system is a starting position before the industrial linear array camera 206 performs photographing, an X direction is a direction along an axis of a roller, a Z direction is a laser line photographing direction of the industrial linear array camera 206, and a Y direction is determined by a right-hand spiral law rule, namely $\vec{Y} = \vec{Z} \times \vec{X}$.

Step 2: The present system is powered on. After the system is powered on, the user sets the photographing parameters of the industrial linear array camera 206 in the local computer 208, including the frame rate when the industrial linear array camera 206 captures, the number of photos captured by the industrial linear array camera 206, and the number of frames included in a single photo. Theoretically, the number of photos captured by the industrial linear array camera 206 is equal to an integer part of a result obtained by dividing the axial length of the roller surface by the length of the laser line photographing area in the axial direction. The number of line laser frames of a single photo captured by the industrial linear array camera 206 (corresponding to the number of rows of a single photo) is theoretically equal to a period when the roller rotates steadily multiplied by the camera's photographing frame rate. The position of the industrial linear array camera 206 is set in the motion controller 207 when each photo is captured. The user establishes a unique database for each roller surface in the operation management system 302 according to information such as groups, manufacturers, and equipment types, and sets a threshold value for determining a roller surface defect. For a specific roller surface, it only needs to set the photographing parameters once and build a database once, and there is no need to repeat setting for subsequent photographing. After the setting is completed, the user presses the photographing trigger switch 205, and the system starts to run an automatic roller surface photographing program.

Step 3: The operating steps of the automatic roller surface photographing program can be subdivided as follows:

1) The motion controller 207 initializes the parameters, and sends a command to the electric push rod, and the electric push rod contracts to ensure that the top plate of the camera dust-proof box 110 is in a closed state.

2) The motion controller 207 confirms whether the ball 104 is at the starting position by querying the signal of the first limit switch 201, namely, the position on the lead screw 103 where the first limit switch 201 is located. If the ball 104 is at the initial position, then no action is performed. If the ball 104 is not at the initial position, then the motion controller 207 sends a command to the lead screw motor 109, and the lead screw motor 109 drives the lead screw 103 to rotate, so that the ball 104 returns to the starting position. Thus, the industrial linear array camera 206 fixedly connected to the ball 104 is brought back to the starting position.

3) The motion controller 207 sends a command to the electric push rod to extend, and the top plate of the camera dust-proof box 110 is opened, so that the industrial linear array camera 206 has the field of view of the photographing roller surface.

4) The motion controller 207 sends a command to the dust-proof cover motor 114. The dust-proof cover motor 114 drives the camera dust-proof cover 112 to rotate through the synchronous belt 115. The brush 111 sweeps away the floating dust on the outer side of the camera dust-proof cover 112 to ensure that the industrial linear array camera 206 is not blocked by floating dust when photographing, and the captured photos are clear.

5) The motion controller 207 judges the signal returned by the roller proximity switch 204, confirms that the roller running cycle of the roller press 121 reaches a stable state, and then executes a next step.

6) The motion controller 207 sends a command to the lead screw motor 109, and the lead screw motor 109 drives the lead screw 103 to rotate to move the ball 104 to the photographing position set by the user in Step 2, so that the industrial line array camera 206 fixedly connected onto the ball 104 is transported to a set photographing position. In the process of the ball 104 moving to the set position, the motion controller 207 performs negative feedback control through the measurement signal of the displacement sensor 120, so that the displacement control of the ball 104 is more accurate. While controlling the movement of the ball 104, the motion controller 207 simultaneously monitors the signals of the first limit switch 201 and the second limit switch 202 to ensure that the current position of the ball 104 is limited between the first limit switch 201 and the second limit switch 202.

7) After the industrial linear array camera 206 is sent to the photographing position set in Step 2, the motion controller 207 waits for the triggering photographing signal of the roller proximity switch 204. When the roller proximity stop 203 fixedly connected onto the roller moves to the detection area of the roller proximity switch 204, the roller proximity switch 204 sends a proximity signal to the motion controller 207. After the motion controller 207 detects the signal, it sends a photographing command to the industrial linear array camera 206, and the industrial linear array camera 206 immediately captures an image of the roller surface. After the single photo is captured, the industrial linear array camera 206 sends the photo data to the local computer 208 via the data line.

8) Steps 6) and 7) are repeated until the number of photos captured by the industrial linear array camera 206 is equal to the number of photos captured in Step2. The motion controller 207 sends a signal to the electric push rod to contract the electric push rod, thereby closing an end lid plate on the camera dust-proof box 110. The motion controller 207 sends a control signal to the lead screw motor 109, and drives the lead screw 103 to rotate to make the ball 104 back to starting position.

9) The local computer 208 sends the photos captured by the industrial linear array camera 206 and the photographing parameters to the original image processing system 301 via Ethernet.

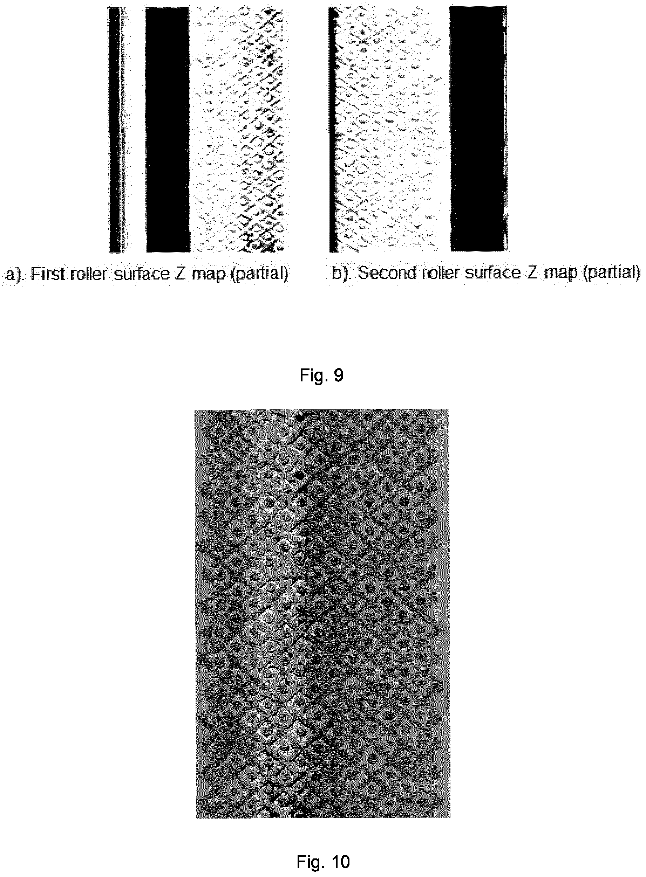

Step 4: The original image processing system 301 stores and reads the original photos sent by the local computer 208. Each original image can be decomposed into a depth map X along the axial direction of the roller, a depth map Y along the circumferential direction of the roller, and a depth map Z along the radial direction of the roller. The depth map Z is as shown in Fig. 9. According to the photographing sequence of each original image, the overlapping area of Z maps corresponding to every two original images in adjacent photographing sequences is positioned and cropped, and there is no overlapping area between two Z maps in the adjacent photographing sequences after cropping. The effective roller surface area in all Z maps is extracted and spliced according to the photographing order to obtain a complete roller surface Z map. Linear calibration is performed on the complete roller surface Z map, and noise points are filtered out to obtain a final roller surface Z map. The final roller surface Z map is as shown in Fig. 10. The depth information is extracted from the final roller surface Z map, and roller surface point cloud data T is generated according to a prescribed format.

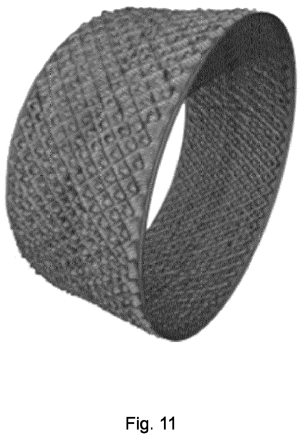

Step 5: The original image processing system 301 sends the generated roller surface point cloud data to a specific path of the roller surface database established by the user in the operation management system 302 in Step 2. The operation management system 302 regularly detects or is triggered by the user, and scans the specific path to determine whether there is newly sent roller surface point cloud data T. If new roller surface point cloud data T is detected, then the roller surface point cloud data T will be analyzed immediately to generate a two-dimensional and three-dimensional model of the roller surface, and its defects will be detected according to an image processing algorithm. At the same time, the operation management system 302 compares the results of this inspection with the historical detection data to obtain the dynamic change information of the roller surface wear. These detection results are compared with the defect threshold set by the user in Step 2, and the user detection results are stored and reported. The user can query the results of previous roller surface detections in the operation management system 302 at any time. Fig. 7 is a flowchart of image processing performed by the data processing module 300, and Fig. 11 is a 3D diagram of the roller surface generated by the operation management system 302 according to the roller surface point cloud data T.

Step 6: When the user does not need to detect the roller surface, he can choose to turn off the system power to end the process. Conversely, if he needs to continue to detect the roller surface, Steps 2 to 5 are repeated until there is no need to detect the roller surface.

In summary, the automatic detection device and detection method for the roller surface of the roller press in the embodiments of the present invention are directed to the defects such as low degree of automation, low detection accuracy, and no quantitative data support in manual detection of the roller surface of the roller press. The automatic detection device for the roller surface of the roller press obtains partial photos of the roller surface by an industrial linear array camera scanning the roller surface, and moves the photographing position of the industrial linear array camera to obtain multiple partial photos of the roller surface, and the partial roll surface photos are cropped and spliced to obtain the point cloud data of the complete roll surface. The two-dimensional and three-dimensional models of the roller surface are established according to the point cloud data, roller surface defects are detected, and the database system is established to manage different roller surfaces. The mechanism of the present invention is provided with a dust-proof device, which has good stability and reliability. The user sets different industrial line laser scanning photographing parameters to realize the detection of different roller surface types with good scalability.

The above embodiments are only used to illustrate the technical solutions of the present invention, and are not intended to be limiting.

## Claims

1. An automatic detection device for a roller surface of a roller press, comprising a photographing control module (200), a motion execution module (100) and a data processing module (300), wherein:

   the photographing control module (200) comprises an industrial linear array camera (206), a motion controller (207) and a local computer (208); the industrial linear array camera (206) is provided above the roller surface of the roller press; and the local computer (208) is in communication connection with the industrial linear array camera (206), and is configured to be used to set photographing parameters of the industrial linear array camera (206) and receive photos captured by the industrial linear array camera (206);
   wherein:

   the motion execution module (100) comprises a lead screw (103), a lead screw motor (109), a ball (104) and a camera dust-proof box (110);
   the lead screw (103) is installed on a lead screw base (102) by bearing fit, the ball (104) is installed on the lead screw (103), and the ball (104) can move linearly back and forth along the lead screw (103);
   the lead screw motor (109) is fixedly connected to the lead screw (103) through a lead screw coupling (108), a camera support plate (107) is fixedly connected below the ball (104), the bottom of the camera support plate (107) is fixedly connected to the camera dust-proof box (110), the interior of the camera dust-proof box (110) is provided with an electric push rod, the electric push rod is rotatably connected to inner sides of upper and lower end surfaces of the camera dust-proof box (110), the electric push rod is retractable, and opening and closing of the lower end surface of the camera dust-proof box (110) can be controlled by controlling extension and contraction of the electric push rod;
   the industrial linear array camera (206) is fixed inside the camera dust-proof box (110), the industrial linear array camera (206) is in communication connection with the motion controller (207), and the industrial linear array camera (206) is configured to execute a photographing task after receiving a photographing signal sent out by the motion controller (207), and send captured photos to the local computer (208) after finishing photographing; and
   the local computer (208) is configured to send the captured photos and photographing parameters to the data processing module (300), and the data processing module (300) is configured to decompose, crop, splice, and correct original photo data sent by the local computer (208), extract depth information according to image gray values, generate cloud data of detected roller surface points in a prescribed format and generate two-dimensional and three-dimensional models of the roller surface; and
   the data processing module (300) is further configured to detect defects of the roller surface, compare them with its historical data to obtain wear speeds and defect changes of the roller surface, and store detection results and report them to a user.

2. The automatic detection device for the roller surface of the roller press according to claim 1, wherein:

   the interior of the camera dust-proof box (110) is further provided with a camera dust-proof cover (112) and a camera dust-proof cover bearing seat (113);
   the camera dust-proof cover bearing seat (113) is fixedly connected to the lower end surface of the camera dust-proof box (110), and the industrial linear array camera (206) is fixedly connected to the camera dust-proof cover bearing seat (113) through an industrial camera support shaft (118);
   the camera dust-proof cover (112) is a transparent cylindrical cover, of which two ends are installed on the industrial camera support shaft (118) by bearing fit, an inner side of a bearing is fixedly connected to the industrial camera support shaft (118), an outer side of the bearing is fixedly connected to the camera dust-proof cover (112), and the camera dust-proof cover (112) can be rotated along the industrial camera support shaft (118); and

an inner side wall of the camera dust-proof box (110) is fixedly connected to a brush (111), a length of the brush (111) is equal to a length of the camera dust-proof cover (112), the brush (111) is in contact with an outer side wall of the camera dust-proof cover (112), and when the camera dust-proof cover (112) rotates around the industrial camera support shaft (118), the brush (111) sweeps away floating dust attached to the outer side wall of the camera dust-proof cover (112).

3. The automatic detection device for the roller surface of the roller press according to claim 2, wherein: one end of the camera dust-proof cover (112) is fixedly connected to a large pulley (116);

a dust-proof cover motor (114) is fixedly connected to an inner side of the lower end surface of the camera dust-proof box (110), its output shaft is fixedly connected to a small pulley (117), and a synchronous belt (115) is connected to the large pulley (116) and the small pulley (117); and the synchronous belt (115) is driven by the dust-proof cover motor (114) to rotate, thereby driving the camera dust-proof cover (112) to rotate.

4. The automatic detection device for the roller surface of the roller press according to claim 1, wherein:

the photographing control module (200) further comprises a displacement sensor (120), and a draw-wire displacement sensor is selected as the displacement sensor (120); and the displacement sensor (120) is in communication connection with the motion controller (207); and one end of the displacement sensor (120) is fixed on the ball (104), and the other end is fixed on the lead screw base (102), so as to measure a displacement of the ball (104), realize negative feedback control of the displacement of the ball (104), and improve realization accuracy of displacement control of the ball (104).

5. The automatic detection device for the roller surface of the roller press according to claim 1, wherein:

an organ cover (106) is provided on the outside of the lead screw (103); the organ cover (106) is divided into two parts, one end of each part is fixedly connected to two ends of the lead screw base (102), and the other end is fixed to two ends of the camera support plate (107), thereby completely wrapping the lead screw (103) to prevent external dust pollution.

6. The automatic detection device for the roller surface of the roller press according to claim 1, wherein:

the automatic detection device further comprises a cable drag (105); the lead screw bearing seat (102) is fixedly connected to a support frame (101); and one end of the cable drag (105) is fixedly connected to the support frame (101), and the other end is fixed to the camera dust-proof box (110), and a cable of electrical equipment passes therethrough to protect and regulate cable installation.

7. The automatic detection device for the roller surface of the roller press according to claim 1, wherein:

the photographing control module (200) specifically comprises a first limit switch (201), a second limit switch (202), a roller proximity stop (203), a roller proximity switch (204), a photographing trigger switch (205), the industrial linear array camera (206), the motion controller (207), the local computer (208), a power supply (209), and an electrical box (210); the first limit switch (201) and the second limit switch (202) are fixedly connected to both ends of the lead screw base (102) so as to limit a movement range of the camera dust-proof box (110); the roller proximity stop (203) is fixedly connected to a roller of the roller press, and rotates with the roller; the roller proximity switch (204) is fixedly connected to a frame of the roller press, and when the roller proximity stop (203) rotates to a detection region of the roller proximity switch (204), the roller proximity switch (204) sends out a proximity signal; the industrial linear array camera (206) is installed on the industrial camera support shaft (118) and is wrapped by the camera dust-proof cover (112), and the camera dust-proof cover (112) is transparent, which does not affect photographing of the industrial linear array camera (206); the electrical box (210) is fixed on the frame of the roller press (121); and the photographing trigger switch (205), the motion controller (207), the local computer (208), and the power supply (209) are installed inside the electrical box (210); the trigger photographing switch (205) is configured to trigger a roller surface detection program to start detection when manually pressed; and the motion controller (207) is separately in communication connection with the lead screw motor (109), the dust-proof cover motor (114),

the electric push rod, the displacement sensor (120), the first limit switch (201), the second limit switch (202), the roller proximity switch (204), and the industrial linear array camera (206); the local computer (208) is connected to a data line and a control line of the industrial linear array camera (206), and is configured to be used to set the photographing parameters of the industrial linear array camera (206) and receive the photos captured by it; and the power supply (209) supplies power to a system.

8. The automatic detection device for the roller surface of the roller press according to claim 1, wherein:

the data processing module (300) is a server, and data is transmitted between the data processing module (300) and the local computer (208) via Ethernet; data processing software is installed in the data processing module (300), and can be specifically divided into two subsystems: an original image processing system (301) and an operation management system (302); wherein the original image processing system (301) is configured to process original roller surface image data sent by the local computer (208), perform preprocessing, cropping and splicing on it, and calculate the roller surface point cloud data; the operation management system (302) is configured to perform modeling according to the roller surface point cloud data, and detect roller surface defects and wear; and the operation management system (302) is configured to classify and manage different roller surfaces according to manufacturers, roller surface types, and ID numbers of industrial linear array cameras (206) used for detection, save the roller surface detection results in a local database and report the detection results to the user.

9. An automatic detection method for a roller surface of a roller press using the automatic detection device for the roller surface of the roller press according to any one of claims 1 to 8, wherein:
the automatic detection method comprises the following steps:

S100, camera calibration; comprising calibrating the industrial linear array camera (206), and establishing a conversion relationship between a pixel gray value and a real-world displacement; establishing a world coordinate system of a roller surface inspection system, and converting a result captured by the industrial linear array camera (206) into roller surface point cloud data expressed in this coordinate system; an origin of the established world coordinate system is a starting position before the industrial linear array camera (206) performs photographing, an X direction is a direction along an axis of a roller, a Z direction is a laser line photographing direction of the industrial linear array camera (206), and a Y direction is determined by a right-hand spiral law rule, namely $\vec{Y} = \vec{Z} \times \vec{X}$;
S200, comprising powering on a system, and rollers of the roller press (121) starting to rotate: a user setting parameters in the photographing control module (200);
the user setting photographing parameters of the industrial linear array camera (206) in the local computer (208);
the user establishing a unique database for each roller surface in the operation management system (302) according to information of groups, manufacturers and equipment types, wherein for a specific roller surface, it only needs to set the photographing parameters once and build a database once, and there is no need to repeat them for subsequent photographing; and after the setting is completed, the user pressing the photographing trigger switch (205), and the system starting to run an automatic roller surface detection program;
S300, comprising the motion controller (207) first initializing a program to check whether a lid of the camera dust-proof box (110) has been closed, and whether the ball (104) has returned to a starting point, and if not completed, then executing actions of the camera dust-proof box (110) closing the lid and the ball (104) returning to the starting point;
then the motion controller (207) sequentially executing lid opening of the camera dust-proof box (110) and dust sweeping of a camera dust-proof cover (112);
the motion controller (207) sending a photographing command;
S400, comprising the industrial linear array camera (206) executing a photographing task after receiving a photographing signal sent by the motion controller (207);
after the industrial linear array camera (206) has finished photographing, sending captured photos to the local computer (208);
S500, comprising repeatedly executing actions of the ball (104) running to a designated photographing position and the motion controller (207) sending the photographing command in Step 3 and Step 4, until the number of captured photos is equal to the number of shots set by the user in Step 2;
S600, comprising the motion controller (207) sending commands to drive the ball (104) back to the starting point and to drive the camera dust-proof box (110) to close the lid;

S700, comprising the local computer (208) sending the captured photos and photographing parameters to an original image processing system (301);

S800, comprising the original image processing system (301) decomposing, cropping, splicing, and correcting original photo data sent by the local computer (208), extracting depth information according to image gray values, and generating cloud data of detected roller surface points in a prescribed format;

the original image processing system (301) sending the generated point cloud data of the roller surface to a specific path of the database established by the user in the operation management system (302) in Step 2;

S900, comprising the operation management system (302) analyzing the received point cloud data, generating two-dimensional and three-dimensional models of the roller surface, detecting its defects, comparing them with its historical data to obtain wear speeds and defect changes of the roller surface, storing detection results and reporting them to the user; and

S1000, comprising when the user does not need to detect the roller surface again, powering off the system; and conversely, if he needs to continue to detect the roller surface, then repeating S200 to S900 until the roller surface does not need to be detected again.

10. The automatic detection method for the roller surface of the roller press according to claim 9, wherein:

the motion controller (207) executing the photographing command in the S300 specifically comprises:

after the motion controller (207) confirms that the rollers of the roller press (121) have a stable running cycle, driving the ball (104) to run to a designated photographing position, when the ball (104) runs to the designated position and then the roller proximity stop (203) approaches the roller proximity switch (204) again, the motion controller (207) monitoring a proximity signal sent by the roller proximity switch (204), and at this time, the motion controller (207) sending a photographing command to the industrial linear array camera (206).

**Patentansprüche**

1. Automatische Detektionseinrichtung für eine Walzenoberfläche einer Walzenpresse, umfassend ein Aufnahmesteuerungsmodul (200), ein Bewegungsausführungsmodul (100) und ein Datenverarbeitungsmodul (300), wobei

das Aufnahmesteuerungsmodul (200) eine industrielle Zeilenkamera (206), einen Bewegungskontroller (207) und einen lokalen Computer (208) umfasst; die industrielle Zeilenkamera (206) oberhalb der Walzenoberfläche der Walzenpresse angeordnet ist; und der lokale Computer (208) in Kommunikationsverbindung mit der industriellen Zeilenkamera (206) steht und dazu ausgelegt ist, die Aufnahmeparameter der industriellen Zeilenkamera (206) einzustellen und die von der industriellen Zeilenkamera (206) erfassten Bilder zu empfangen;

wobei

das Bewegungsausführungsmodul (100) eine Leitspindel (103), einen Leitspindelmotor (109), eine Kugel (104) und ein Kamerastaubschutzgehäuse (110) umfasst;

die Leitspindel (103) durch eine Lagerpassung auf einer Leitspindelbasis (102) montiert ist, die Kugel (104) auf der Leitspindel (103) montiert ist, und die Kugel (104) sich linear vor und zurück entlang der Leitspindel (103) bewegen kann; der Leitspindelmotor (109) durch eine Leitspindelkupplung (108) fest mit der Leitspindel (103) verbunden ist, eine Kameraträgerplatte (107) unter der Kugel (104) fest verbunden ist, der Boden der Kameraträgerplatte (107) fest mit dem Kamerastaubschutzgehäuse (110) verbunden ist, das Innere des Kamerastaubschutzgehäuses (110) mit einem elektrischen Schubzylinder versehen ist, der elektrische Schubzylinder drehbar mit inneren Seiten von oberen und unteren Endflächen des Kamerastaubschutzgehäuses (110) verbunden ist, der elektrische Schubzylinder ausfahrbar und einfahrbar ist, und das Öffnen und Schließen der unteren Endfläche des Kamerastaubschutzgehäuses (110) durch die Steuerung der Aus- und Einfahrens des elektrischen Schubzylinders gesteuert werden kann;

die industrielle Zeilenkamera (206) im Inneren des Kamerastaubschutzgehäuses (110) fixiert ist, die industrielle Zeilenkamera (206) in Kommunikationsverbindung mit dem Bewegungskontroller (207) steht, und die industrielle Zeilenkamera (206) dazu ausgelegt ist, nach dem Empfang eines von dem Bewegungskontroller emittierten Aufnahmesignals eine Bildaufnahme durchzuführen, und nach erfolgter Bildaufnahme die erfassten Bilder an den lokalen Computer (208) zu übermitteln; und

der lokale Computer (208) dazu ausgelegt ist, die erfassten Bilder und Aufnahmeparameter an das Datenverarbeitungsmodul (300) zu senden, und das Datenverarbeitungsmodul (300) dazu ausgelegt ist, die vom lokalen Computer (208) gesendeten ursprünglichen Bilddaten zu zerlegen, zuzuschneiden, zusammenzufügen und zu korrigieren, Tiefeninformationen gemäß Bildgrauwerten zu extrahieren, Wolkendaten der detektierten Walzenoberflächenpunkte in einem vorgeschriebenen Format zu generieren und zweidimensionale und dreidimensionale Modelle der Walzenoberfläche zu generieren; und das Datenverarbeitungsmodul (300) weiter dazu ausgelegt ist, Defekte der Walzenoberfläche zu detektieren, diese mit den zugehörigen historischen Daten zu vergleichen, um Verschleißgeschwindigkeiten und Defektänderungen der Walzenoberfläche zu erhalten, und Detektionsergebnisse zu speichern und einem Benutzer zu berichten.

2. Automatische Detektionseinrichtung für die Walzenoberfläche der Walzenpresse nach Anspruch 1, wobei

das Innere des Kamerastaubschutzgehäuses (110) weiter mit einer Kamerastaubschutzabdeckung (112) und einem Lagerbock (113) für die Kamerastaubschutzabdeckung versehen ist; der Lagerbock (113) für die Kamerastaubschutzabdeckung fest mit der unteren Endfläche des Kamerastaubschutzgehäuses (110) verbunden ist, und die industrielle Zeilenkamera (206) mittels einer industriellen Kameraträgerwelle (118) fest mit dem Lagerbock (113) für die Kamerastaubschutzabdeckung verbunden ist; die Kamerastaubschutzabdeckung (112) eine transparente zylindrische Abdeckung ist, deren zwei Enden durch eine Lagerpassung auf der industriellen Kameraträgerwelle (118) montiert sind, wobei eine innere Seite eines Lagers fest mit der industriellen Kameraträgerwelle (118) verbunden ist, eine äußere Seite des Lagers fest mit der Kamerastaubschutzabdeckung (112) verbunden ist, und die Kamerastaubschutzabdeckung (112) entlang der industriellen Kameraträgerwelle (118) gedreht werden kann; und eine innere Seitenwand des Kamerastaubschutzgehäuses (110) fest mit einer Bürste (111) verbunden ist, eine Länge der Bürste (111) gleich der Länge der Kamerastaubschutzabdeckung (112) ist, die Bürste (111) in Kontakt mit einer äußeren Seitenwand der Kamerastaubschutzabdeckung (112) steht, und wenn die Kamerastaubschutzabdeckung (112) sich um die industrielle Kameraträgerwelle (118) dreht, die Bürste (111) den an der äußeren Seitenwand der Kamerastaubschutzabdeckung (112) haftenden Staub wegwischt.

3. Automatische Detektionseinrichtung für die Walzenoberfläche der Walzenpresse nach Anspruch 2, wobei ein Ende der Kamerastaubschutzabdeckung (112) fest mit einer großen Riemenscheibe (116) verbunden ist;

ein Staubschutzabdeckungsmotor (114) fest mit einer inneren Seite der unteren Endfläche des Kamerastaubschutzgehäuses (110) verbunden ist, seine Ausgangswelle fest mit einer kleinen Riemenscheibe (117) verbunden ist, und ein Synchronriemen (115) mit der großen Riemenscheibe (116) und der kleinen Riemenscheibe (117) verbunden ist; und wobei der Synchronriemen (115) durch den Staubschutzabdeckungsmotor (114) zur Drehung angetrieben wird, wodurch die Kamerastaubschutzabdeckung (112) zur Rotation angetrieben wird.

4. Automatische Detektionseinrichtung für die Walzenoberfläche der Walzenpresse nach Anspruch 1, wobei

das Aufnahmesteuerungsmodul (200) weiter einen Wegsensor (120) umfasst, und ein Drahtseil-Wegsensor als der Wegsensor (120) ausgewählt wird; und der Wegsensor (120) in Kommunikationsverbindung mit dem Bewegungskontroller (207) steht; und ein Ende des Wegsensors (120) auf der Kugel (104) fixiert ist, und das andere Ende auf der Leitspindelbasis (102) fixiert ist, um eine Verschiebung der Kugel (104) zu messen, eine negative Rückkopplungssteuerung der Verschiebung der Kugel (104) zu realisieren und die Realisierungsgenauigkeit der Verschiebungssteuerung der Kugel (104) zu verbessern.

5. Automatische Detektionseinrichtung für die Walzenoberfläche der Walzenpresse nach Anspruch 1, wobei

eine Faltenbalgabdeckung (106) auf der Außenseite der Leitspindel (103) angeordnet ist; die Faltenbalgabdeckung (106) in zwei Teile unterteilt ist, wobei jeweils ein Ende jedes Teils fest mit den beiden Enden der Leitspindelbasis (102) verbunden ist, und das andere Ende an den beiden Enden der Kameraträgerplatte (107) fixiert ist, wodurch die Leitspindel (103) vollständig umschlossen und vor externer Staubverschmutzung geschützt wird.

6. Automatische Detektionseinrichtung für die Walzenoberfläche der Walzenpresse nach Anspruch 1, wobei

die automatische Detektionseinrichtung weiter einen Kabelschlepper (105) umfasst;
die Leitspindelbasis (102) fest mit einem Trägerrahmen (101) verbunden ist; und ein Ende des Kabelschleppers (105) fest mit dem Trägerrahmen (101) verbunden ist, und das andere Ende am Kamerastaubschutzgehäuse (110) fixiert ist, und ein Kabel von elektrischen Geräten hindurchverläuft, um die Kabelinstallation zu schützen und zu ordnen.

7. Automatische Detektionseinrichtung für die Walzenoberfläche der Walzenpresse nach Anspruch 1, wobei

das Aufnahmesteuerungsmodul (200) speziell einen ersten Grenzschalter (201), einen zweiten Grenzschalter (202), einen Walzennäherungsanschlag (203), einen Walzennäherungsschalter (204), einen Aufnahmeauslöseschalter (205), eine industrielle Zeilenkamera (206), den Bewegungskontroller (207), den lokalen Computer (208), eine Stromversorgung (209) und einen Schaltschrank (210) umfasst;
der erste Grenzschalter (201) und der zweite Grenzschalter (202) fest an beiden Enden der Leitspindelbasis (102) verbunden sind, um einen Bewegungsbereich des Kamerastaubschutzgehäuses (110) zu begrenzen;
der Walzennäherungsanschlag (203) fest mit der Walze der Walzenpresse verbunden ist und sich mit der Walze dreht;
der Walzennäherungsschalter (204) fest mit einem Rahmen der Walzenpresse verbunden ist, und wenn der Walzennäherungsanschlag (203) in einen Detektionsbereich des Walzennäherungsschalters (204) rotiert, der Walzennäherungsschalter (204) ein Näherungssignal aussendet;
die industrielle Zeilenkamera (206) auf der industriellen Kameraträgerwelle (118) montiert ist und von der Kamerastaubschutzabdeckung (112) umhüllt wird, und die Kamerastaubschutzabdeckung (112) transparent ist, was die Bildaufnahme der industriellen Zeilenkamera (206) nicht beeinflusst;
der Schaltschrank (210) auf dem Rahmen der Walzenpresse (121) fixiert ist; und der Aufnahmeauslöseschalter (205), der Bewegungskontroller (207), der lokale Computer (208) und die Stromversorgung (209) im Inneren des Schaltschranks (210) montiert sind;
der Aufnahmeauslöseschalter (205) dazu ausgelegt ist, bei manueller Betätigung ein Detektionsprogramm zur Überprüfung der Walzenoberfläche auszulösen, um die Detektion zu starten; und der Bewegungskontroller (207) separat in Kommunikationsverbindung mit dem Leitspindelmotor (109), dem Staubschutzabdeckungsmotor (114), dem elektrischen Schubzylinder, dem Wegsensor (120), dem ersten Grenzschalter (201), dem zweiten Grenzschalter (202), dem Walzennäherungsschalter (204) und der industriellen Zeilenkamera (206) steht;
der lokale Computer (208) mit einer Datenleitung und einer Steuerleitung der industriellen Zeilenkamera (206) verbunden ist und dazu ausgelegt ist, die Aufnahmeparameter der industriellen Zeilenkamera (206) einzustellen und die von ihr erfassten Bilder zu empfangen; und die Stromversorgung (209) ein System mit Strom versorgt.

8. Automatische Detektionseinrichtung für die Walzenoberfläche der Walzenpresse nach Anspruch 1, wobei

das Datenverarbeitungsmodul (300) ein Server ist, und Daten zwischen dem Datenverarbeitungsmodul (300) und dem lokalen Computer (208) über Ethernet übertragen werden;
eine Datenverarbeitungssoftware im Datenverarbeitungsmodul (300) installiert ist und kann speziell in zwei Subsysteme unterteilt werden: ein Originalbildverarbeitungssystem (301) und ein Betriebsmanagementsystem (302);
wobei das Originalbildverarbeitungssystem (301) dazu ausgelegt ist, die ursprüngliche Walzenoberflächenbilddaten zu verarbeiten, die vom lokalen Computer (208) gesendet werden, daran Vorverarbeitung, Zuschneiden und Zusammenzufügen durchzuführen und die Punktwolkendaten der Walzenoberfläche zu berechnen;
das Betriebsmanagementsystem (302) dazu ausgelegt ist, Modellierung gemäß den Punktwolkendaten der Walzenoberfläche durchzuführen und Walzenoberflächenfehler und -verschleiß zu detektieren; und
das Betriebsmanagementsystem (302) dazu ausgelegt ist, verschiedene Walzenoberflächen nach Herstellern, Walzenoberflächentypen und ID-Nummern der für die Detektion verwendeten industriellen Zeilenkameras (206) zu klassifizieren und zu verwalten, die Detektionsergebnisse der Walzenoberfläche in einer lokalen Datenbank zu speichern und die Detektionsergebnisse dem Benutzer zu berichten.

9. Automatisches Detektionsverfahren für eine Walzenoberfläche einer Walzenpresse, das die automatische Detektionseinrichtung für die Walzenoberfläche der Walzenpresse nach einem der Ansprüche 1 bis 8 verwendet, wobei das automatische Detektionsverfahren die folgenden Schritte umfasst:

S100, Kalibrieren der Kamera; umfassend Kalibrieren der industriellen Zeilenkamera (206) und Erstellen einer Umwandlungsbeziehung zwischen einem Pixelgrauwert und einer realen Verschiebung;

Erstellen eines Weltkoordinatensystems eines Walzenoberflächeninspektionssystems und Umwandeln eines von der industriellen Zeilenkamera (206) aufgenommenen Ergebnisses in Punktwolkendaten der Walzenoberfläche, die in diesem Koordinatensystem ausgedrückt sind;

ein Ursprung des erstellten Weltkoordinatensystems eine Startposition ist, bevor die industrielle Zeilenkamera (206) die Bildaufnahme durchführt, eine X-Richtung eine Richtung entlang einer Achse einer Walze ist, eine Z-Richtung eine Laserlinien-Bildaufnahmerichtung der industriellen Zeilenkamera (206) ist, und eine Y-Richtung durch eine Rechtshand-Spiralregel bestimmt wird, nämlich $\vec{Y} = \vec{Z} \times \vec{X}$.

S200, umfassend Einschalten eines Systems, und das Starten der Rotation der Walzen der Walzenpresse (121);

ein Benutzer Parameter im Aufnahmesteuerungsmodul (200) einstellt;

der Benutzer Aufnahmeparameter der industriellen Zeilenkamera (206) im lokalen Computer (208) einstellt;

der Benutzer für jede Walzenoberfläche im Betriebsmanagementsystem (302) gemäß Informationen von Gruppen, Herstellern und Gerätetypen eine einzigartige Datenbank erstellt, wobei für eine spezifische Walzenoberfläche die Aufnahmeparameter nur einmal eingestellt und eine Datenbank nur einmal erstellt werden müssen, und keine Wiederholung für nachfolgende Aufnahmen erforderlich ist; und nach Abschluss der Einstellung der Benutzer den Aufnahmeauslöseschalter (205) drückt, und das System beginnt, ein automatisches Detektionsprogramm zur Überprüfung der Walzenoberfläche auszuführen;

S300, umfassend, dass der Bewegungskontroller (207) zuerst ein Programm initialisiert, um zu überprüfen, ob ein Deckel des Kamerastaubschutzgehäuses (110) geschlossen wurde und ob die Kugel (104) zum Startpunkt zurückgekehrt ist, und falls nicht abgeschlossen, dann Aktionen des Schließens des Deckels des Kamerastaubschutzgehäuses (110) und des Zurückkehrens der Kugel (104) zum Startpunkt ausführt;

dann der Bewegungskontroller (207) sequenziell das Öffnen des Deckels des Kamerastaubschutzgehäuses (110) und die Staubentfernung der Kamerastaubschutzabdeckung (112) ausführt;

der Bewegungskontroller (207) einen Bildaufnahmebefehl sendet;

S400, umfassend, dass die industrielle Zeilenkamera (206) eine Bildaufnahme ausführt, nachdem sie ein vom Bewegungskontroller (207) gesendetes Aufnahmesignal empfangen hat;

nach erfolgter Bildaufnahme durch die industrielle Zeilenkamera (206) die erfassten Bilder an den lokalen Computer (208) übermittelt werden;

S500, umfassend Wiederholtes Ausführen der Bewegungsaktionen der Kugel (104) zu einer festgelegten Aufnahmeposition und der Übermittlung des Bildaufnahmebefehls durch den Bewegungskontroller (207) in Schritt 3 und Schritt 4, bis die Anzahl der erfassten Bilder der Anzahl der vom Benutzer in Schritt 2 festgelegten Aufnahmen entspricht;

S600, umfassend, dass der Bewegungskontroller (207) Befehle sendet, um die Kugel (104) zurück zum Startpunkt zu treiben und das Kamerastaubschutzgehäuse (110) zum Schließen des Deckels zu treiben;

S700, umfassend, dass der lokale Computer (208) die erfassten Bilder und Aufnahmeparameter an ein Originalbildverarbeitungssystem (301) sendet;

S800, umfassend, dass das Originalbildverarbeitungssystem (301) die vom lokalen Computer (208) gesendeten ursprünglichen Bilddaten zerlegt, zuschneidet, zusammengefügt und korrigiert, Tiefeninformationen gemäß Bildgrauwerten extrahiert und Wolkendaten der detektierten Walzenoberflächenpunkte in einem vorgeschriebenen Format generiert;

das Originalbildverarbeitungssystem (301) die generierten Punktwolkendaten der Walzenoberfläche an einen spezifischen Pfad der Datenbank sendet, die der Benutzer im Betriebsmanagementsystem (302) in Schritt 2 erstellt hat;

S900, umfassend, dass das Betriebsmanagementsystem (302) die empfangenen Punktwolkendaten analysiert, zweidimensionale und dreidimensionale Modelle der Walzenoberfläche generiert, ihre Defekte detektiert, sie mit ihren historischen Daten vergleicht, um Verschleißgeschwindigkeiten und Defektänderungen der Walzenoberfläche zu erhalten, Detektionsergebnisse speichert und sie dem Benutzer meldet; und

S1000, umfassend, dass, wenn der Benutzer die Walzenoberfläche nicht erneut detektieren muss, das System ausgeschaltet wird; und umgekehrt, wenn er die Walzenoberfläche weiter detektieren muss, dann S200 bis S900 wiederholt, bis die Walzenoberfläche nicht erneut detektiert werden muss.

**10.** Automatisches Detektionsverfahren für die Walzenoberfläche der Walzenpresse nach Anspruch 9, wobei

das Ausführen des Bildaufnahmebefehls durch den Bewegungskontroller (207) in S300 speziell umfasst:

nachdem der Bewegungskontroller (207) bestätigt hat, dass die Walzen der Walzenpresse (121) einen stabilen Laufzyklus haben, er die Kugel (104) antreibt, um zu einer bestimmten Aufnahmeposition zu laufen, wenn die Kugel (104) zur bestimmten Position gelaufen ist und dann der Walzennäherungsanschlag (203) sich erneut dem Walzennäherungsschalter (204) nähert, der Bewegungskontroller (207) ein Näherungssignal überwacht, das vom Walzennäherungsschalter (204) gesendet wird, und zu diesem Zeitpunkt der Bewegungskontroller (207) einen Bildaufnahmebefehl an die industrielle Zeilenkamera (206) sendet.

## Revendications

**1.** Un dispositif de détection automatique de la surface d'un rouleau d'une presse à rouleaux, comprenant un module de commande de photographie (200), un module d'exécution de mouvement (100) et un module de traitement de données (300), dans lequel :

le module de commande de photographie (200) comprend une caméra linéaire industrielle (206), un contrôleur de mouvement (207) et un ordinateur local (208) ; la caméra linéaire industrielle (206) est disposée au-dessus de la surface du rouleau de la presse à rouleaux ; et l'ordinateur local (208) est en connexion de communication avec la caméra linéaire industrielle (206), et est configuré pour être utilisé pour définir les paramètres de photographie de la caméra linéaire industrielle (206) et recevoir des photos capturées par la caméra linéaire industrielle (206) ;

dans lequel:

le module d'exécution de mouvement (100) comprend une vis mère (103), un moteur de vis mère (109), une bille (104) et un boîtier anti-poussière de caméra (110) ;

la vis mère (103) est installée sur une base de vis mère (102) par ajustement de roulement, la bille (104) est installée sur la vis mère (103), et la bille (104) peut se déplacer linéairement d'avant en arrière le long de la vis mère (103) ;

le moteur à vis mère (109) est relié de manière fixe à la vis mère (103) par l'intermédiaire d'un accouplement à vis mère (108), une plaque de support de caméra (107) est reliée de manière fixe sous la bille (104), le bas de la plaque de support de caméra (107) est relié de manière fixe au boîtier anti-poussière de caméra (110), l'intérieur du boîtier anti-poussière de caméra (110) est pourvu d'une tige de poussée électrique, la tige de poussée électrique est reliée de manière rotative sur les parois internes des surfaces d'extrémité supérieure et inférieure du boîtier anti-poussière de caméra (110), la tige de poussée électrique est rétractable, et l'ouverture et la fermeture de la surface d'extrémité inférieure du boîtier anti-poussière de caméra (110) peuvent être contrôlées en contrôlant l'extension et la contraction de la tige de poussée électrique ;

la caméra linéaire industrielle (206) est fixée à l'intérieur du boîtier anti-poussière de caméra (110), la caméra linéaire industrielle (206) est en connexion de communication avec le contrôleur de mouvement (207), et la caméra linéaire industrielle (206) est configurée pour exécuter une tâche de photographie après avoir reçu un signal de photographie envoyé par le contrôleur de mouvement (207), et envoyer les photos capturées à l'ordinateur local (208) après avoir terminé la photographie ; et

l'ordinateur local (208) est configuré pour envoyer les photos capturées et les paramètres de photographie au module de traitement de données (300), et le module de traitement de données (300) est configuré pour décomposer, recadrer, concaténer et corriger les données photo originales envoyées par l'ordinateur local (208), extraire les informations de profondeur en fonction des valeurs de gris de l'image, générer des données de nuage de points de surface de rouleau détectés dans un format prescrit et générer des modèles bidimensionnels et tridimensionnels de la surface du rouleau ; et le module de traitement de données (300) est en outre configuré pour détecter des défauts de la surface du rouleau, les comparer avec ses données historiques pour obtenir des vitesses d'usure et des changements de défauts de la surface du rouleau, et stocker des résultats de détection et les rapporter à un utilisateur.

**2.** Le dispositif de détection automatique de la surface du rouleau de la presse à rouleaux selon la revendication 1, dans lequel :

l'intérieur du boîtier anti-poussière de caméra (110) est en outre pourvu d'un couvercle anti-poussière de caméra (112) et d'un siège de roulement de couvercle anti-poussière de caméra (113) ;

le siège de roulement du couvercle anti-poussière de caméra (113) est relié de manière fixe à la surface d'extrémité inférieure du boîtier anti-poussière de caméra (110), et la caméra linéaire industrielle (206) est reliée de manière fixe au siège de roulement du couvercle anti-poussière de caméra (113) par l'intermédiaire d'un arbre de support de caméra industrielle (118) ;

le couvercle anti-poussière de caméra (112) est un couvercle cylindrique transparent, dont deux extrémités sont installées sur l'arbre de support de caméra industrielle (118) par ajustement de roulement, un côté intérieur d'un roulement est relié de manière fixe à l'arbre de support de caméra industrielle (118), un côté extérieur du roulement est relié de manière fixe au couvercle anti-poussière de caméra (112), et le couvercle anti-poussière de caméra (112) peut être tourné le long de l'arbre de support de caméra industrielle (118) ; et

une paroi latérale intérieure du boîtier anti-poussière de caméra (110) est reliée de manière fixe à une brosse (111), une longueur de la brosse (111) est égale à une longueur du couvercle anti-poussière de l'appareil photo (112), la brosse (111) est en contact avec une paroi latérale extérieure du couvercle anti-poussière de l'appareil photo (112), et lorsque le couvercle anti-poussière de caméra (112) tourne autour de l'arbre de support de caméra industrielle (118), la brosse (111) balaie la poussière flottante attachée à la paroi latérale extérieure du couvercle anti-poussière de caméra (112).

3. Le dispositif de détection automatique de la surface du rouleau de la presse à rouleaux selon la revendication 2, dans lequel : une extrémité du couvercle anti-poussière de caméra (112) est reliée de manière fixe à une grande poulie (116) ; un moteur de couvercle anti-poussière (114) est relié de manière fixe à un côté intérieur de la surface d'extrémité inférieure du boîtier anti-poussière de caméra (110), son arbre de sortie est relié de manière fixe à une petite poulie (117), et une courroie synchrone (115) est reliée à la grande poulie (116) et à la petite poulie (117) ; et la courroie synchrone (115) est entraînée par le moteur du couvercle anti-poussière (114) pour tourner, entraînant ainsi le couvercle anti-poussière de caméra (112) à tourner.

4. Le dispositif de détection automatique de la surface du rouleau de la presse à rouleaux selon la revendication 1, dans lequel :

Le module de commande de photographie (200) comprend en outre un capteur de déplacement (120), et un capteur de déplacement à fil de traction est sélectionné comme capteur de déplacement (120) ; et le capteur de déplacement (120) est en connexion de communication avec le contrôleur de mouvement (207) ; et une extrémité du capteur de déplacement (120) est fixée sur la bille (104), et l'autre extrémité est fixée sur la base de la vis mère (102), afin de mesurer un déplacement de la bille (104), réaliser un contrôle de rétroaction négative du déplacement de la bille (104), et améliorer la précision de réalisation du contrôle de déplacement de la bille (104).

5. Le dispositif de détection automatique de la surface du rouleau de la presse à rouleaux selon la revendication 1, dans lequel :

un couvercle d'organe (106) est prévu à l'extérieur de la vis mère (103) ;
le couvercle de l'organe (106) est divisé en deux parties, une extrémité de chaque partie est fixée de manière fixe aux deux extrémités de la base de la vis mère (102), et l'autre extrémité est fixée aux deux extrémités de la plaque de support de caméra (107), enveloppant ainsi complètement la vis mère (103) pour éviter la pollution par la poussière externe.

6. Le dispositif de détection automatique de la surface du rouleau de la presse à rouleaux selon la revendication 1, dans lequel :

le dispositif de détection automatique comprend en outre un chaîne porte-câbles (105) ;
le siège de roulement de vis mère (102) est relié de manière fixe à un cadre de support (101) ; et une extrémité du chaîne porte-câbles (105) est reliée de manière fixe au cadre de support (101), et l'autre extrémité est fixée au boîtier anti-poussière de caméra (110), et un câble d'équipement électrique passe à travers celui-ci pour protéger et réguler l'installation du câble.

7. Le dispositif de détection automatique de la surface du rouleau de la presse à rouleaux selon la revendication 1, dans lequel :

le module de commande de photographie (200) comprend spécifiquement un premier interrupteur de limite (201), un deuxième interrupteur de limite (202), une butée de proximité de rouleau (203), un interrupteur de proximité de rouleau (204), un interrupteur de déclenchement de photographie (205), la caméra linéaire industrielle (206), le contrôleur de mouvement (207), l'ordinateur local (208), une alimentation électrique (209) et un boîtier électrique (210) ; le premier interrupteur de limite (201) et le deuxième interrupteur de limite (202) sont reliés de manière fixe aux deux extrémités de la base de vis mère (102) afin de limiter une plage de mouvement du boîtier anti-poussière de caméra (110) ; la butée de proximité du rouleau (203) est reliée de manière fixe à un rouleau de la presse à rouleaux et tourne avec le rouleau ; l'interrupteur de proximité de rouleaux (204) est relié de manière fixe à un châssis de la presse à rouleaux, et lorsque la butée de proximité à rouleaux (203) tourne vers une zone de détection du interrupteur de proximité à rouleaux (204), l'interrupteur de proximité à rouleaux (204) envoie un signal de proximité ; la caméra linéaire industrielle (206) est installée sur l'arbre de support de caméra industrielle (118) et est enveloppée par le couvercle anti-poussière de caméra (112), et le couvercle anti-poussière de caméra (112) est transparent, ce qui n'affecte pas la photographie de la caméra linéaire industrielle (206) ; le boîtier électrique (210) est fixé sur le châssis de la presse à rouleaux (121) ; et l'interrupteur de déclenchement de photographie (205), le contrôleur de mouvement (207), l'ordinateur local (208) et l'alimentation électrique (209) sont installés à l'intérieur du boîtier électrique (210) ; l'interrupteur de déclenchement de photographie (205) est configuré pour déclencher un programme de détection de surface de rouleau pour démarrer la détection lorsqu'il est pressé manuellement ; et le contrôleur de mouvement (207) est séparément en connexion de communication avec le moteur à vis mère (109), le moteur de couvercle anti-poussière (114), la tige de poussée électrique, le capteur de déplacement (120), le premier interrupteur de limite (201), le deuxième interrupteur de limite (202), l'interrupteur de proximité à rouleaux (204) et la caméra linéaire industrielle (206) ; l'ordinateur local (208) est connecté à une ligne de données et à une ligne de commande de la caméra linéaire industrielle (206), et est configuré pour être utilisé pour définir les paramètres de photographie de la caméra linéaire industrielle (206) et recevoir les photos capturées par celle-ci ; et l'alimentation électrique (209) alimente un système.

8. Le dispositif de détection automatique de la surface du rouleau de la presse à rouleaux selon la revendication 1, dans lequel :

le module de traitement de données (300) est un serveur, et les données sont transmises entre le module de traitement de données (300) et l'ordinateur local (208) par Ethernet ; un logiciel de traitement de données est installé dans le module de traitement de données (300) et peut être spécifiquement divisé en deux sous-systèmes : un système de traitement d'images originales (301) et un système de gestion des opérations (302) ; dans lequel le système de traitement d'images originales (301) est configuré pour traiter les données d'image de surface de rouleau d'origine envoyées par l'ordinateur local (208), effectuer un prétraitement, un recadrage et un concaténation sur celles-ci, et calculer les données de nuage de points de surface de rouleau ; le système de gestion des opérations (302) est configuré pour effectuer une modélisation en fonction des données du nuage de points de la surface du rouleau et détecter les défauts et l'usure de la surface du rouleau ; et le système de gestion des opérations (302) est configuré pour classer et gérer différentes surfaces de rouleaux en fonction des fabricants, des types de surfaces de rouleaux et des numéros d'identification des caméras linéaires industrielles (206) utilisées pour la détection, enregistrer les résultats de détection de surface de rouleau dans une base de données locale et signaler les résultats de détection à l'utilisateur.

9. Un procédé de détection automatique d'une surface de rouleau d'une presse à rouleaux utilisant le dispositif de détection automatique de la surface de rouleau de la presse à rouleaux selon l'une quelconque des revendications 1 à 8, dans lequel :
le procédé de détection automatique comprend les étapes suivantes :

S100, calibrer la caméra ; comprenant calibrer la caméra linéaire industrielle (206) et établissement d'une relation de conversion entre une valeur de gris de pixel et un déplacement réel ; établir un système de coordonnées mondial d'un système d'inspection de surface de rouleau, et conversion d'un résultat capturé par la caméra linéaire industrielle (206) en données de nuage de points de surface de rouleau exprimées dans ce système de coordonnées ; une origine du système de coordonnées mondial établi est une position de départ avant que la caméra linéaire industrielle (206) effectue la photographie, une direction X est une direction le long d'un axe d'un rouleau, une direction Z est une direction de photographie de ligne laser de la caméra linéaire industrielle (206), et une direction Y est déterminée par une règle de la main droite, à savoir $\vec{Y} = \vec{Z} \times \vec{X}$ ;

S200, comprenant la mise sous tension d'un système et le démarrage de la rotation des rouleaux de la presse à rouleaux (121) ;

un utilisateur définissant des paramètres dans le module de contrôle de photographie (200) ;

l'utilisateur définissant les paramètres de photographie de la caméra linéaire industrielle (206) dans l'ordinateur local (208) ;

l'utilisateur établit une base de données unique pour chaque surface de rouleau dans le système de gestion des opérations (302) en fonction des informations des groupes, des fabricants et des types d'équipements, dans lequel pour une surface de rouleau spécifique, il n'a besoin de définir les paramètres de photographie qu'une seule fois et de créer une base de données une seule fois, et il n'est pas nécessaire de les répéter pour les photographies ultérieures ; et

une fois le réglage terminé, l'utilisateur appuie sur l'interrupteur de déclenchement de la photographie (205) et le système commence à exécuter un programme de détection automatique de la surface du rouleau ;

S300, comprenant le contrôleur de mouvement (207) initialisant d'abord un programme pour vérifier si un couvercle du boîtier anti-poussière de caméra (110) a été fermé, et si la bille (104) est revenue à un point de départ, et si ce n'est pas terminé, alors exécutant des actions du boîtier anti-poussière de caméra (110) fermant le couvercle et la bille (104) retournant au point de départ ; puis le contrôleur de mouvement (207) exécute séquentiellement l'ouverture du couvercle du boîtier anti-poussière de caméra (110) et le balayage de la poussière d'un couvercle anti-poussière de caméra (112) ;

le contrôleur de mouvement (207) envoie une commande de photographie ;

S400, comprenant la caméra linéaire industrielle (206) exécutant une tâche de photographie après avoir reçu un signal de photographie envoyé par le contrôleur de mouvement (207) ;

une fois que la caméra linéaire industrielle (206) a terminé de photographier, envoyer les photos capturées à l'ordinateur local (208) ;

S500, comprenant l'exécution répétée des actions de la bille (104) se déplaçant vers une position de photographie désignée et le contrôleur de mouvement (207) envoyant la commande de photographie à l'étape 3 et à l'étape 4, jusqu'à ce que le nombre de photos capturées soit égal au nombre de prises de vue défini par l'utilisateur à l'étape 2 ;

S600, comprenant le contrôleur de mouvement (207) envoyant des commandes pour entraîner la bille (104) au point de départ et pour entraîner le boîtier anti-poussière de caméra (110) à fermer le couvercle ;

S700, comprenant l'ordinateur local (208) envoyant les photos capturées et les paramètres de photographie à un système de traitement d'images originales (301) ;

S800, comprenant le système de traitement d'images originales (301) décomposant, recadrant, concaténant et corrigeant les données photo d'origine envoyées par l'ordinateur local (208), extrayant des informations de profondeur en fonction des valeurs de gris de l'image et générant des données de nuage de points de surface de rouleau détectés dans un format prescrit ;

le système de traitement d'images originales (301) envoie les données de nuage de points générées de la surface du rouleau à un chemin spécifique de la base de données établi par l'utilisateur dans le système de gestion des opérations (302) à l'étape 2 ;

S900, comprenant le système de gestion des opérations (302) analysant les données de nuage de points reçues, générant des modèles bidimensionnels et tridimensionnels de la surface du rouleau, détectant ses défauts, les comparant à ses données historiques pour obtenir les vitesses d'usure et les changements de défauts de la surface du rouleau, stockant les résultats de détection et les rapportant à l'utilisateur ; et

S1000 : comprenant lorsque l'utilisateur n'a plus besoin de détecter la surface du rouleau, le système se mise hors tension ; et inversement, s'il a besoin de continuer à détecter la surface du rouleau, alors répéter S200 à S900 jusqu'à ce que la surface du rouleau n'ait plus besoin d'être détectée à nouveau.

**10.** Le procédé de détection automatique de la surface du rouleau de la presse à rouleaux selon la revendication 9, dans lequel :

le contrôleur de mouvement (207) exécutant la commande de photographie dans le S300 comprend spécifiquement :

après que le contrôleur de mouvement (207) confirme que les rouleaux de la presse à rouleaux (121) comportes un cycle de fonctionnement stable, entraîner la bille (104) à se déplacer vers une position de photographie désignée, lorsque la bille (104) se déplace vers la position désignée, puis la butée de proximité du rouleau (203) s'approche à nouveau de l'interrupteur de proximité du rouleau (204), le contrôleur de mouvement (207) surveillant un signal de proximité envoyé par l'interrupteur de proximité à rouleaux (204), et à ce moment, le contrôleur de mouvement (207) envoyant une commande de photographie à la caméra linéaire industrielle (206).

Fig. 1

a. Uneven wear                              b. Pit

Fig. 2

Fig. 3

Fig. 4

Fig. 5

Fig. 6

Start

Calibrating a camera, and establishing a
measurement coordinate system

A system is powered on, and a user sets
photographing parameters in a motion controller
207 and a local computer 208, establishes a
database for a specific roller surface in an
operation management system 302, and presses a
photographing trigger switch 205.

A motion controller 207 is initialized, and it
is confirmed that a camera dust-proof box
110 is closed, and a ball 104 is returned to
an initial position.

The motion controller 207 sends a control
command to open a top end lid of the camera
dust-proof box 110, and sweep away floating dust
on a surface of a camera dust-proof cover 112.

The motion controller sends a command to
control the ball 104 to a set photographing
position so that an industrial linear array
camera 206 is conveyed to the set
photographing position.

The motion controller 207 monitors a
proximity signal of a roller proximity switch
204, and the motion controller 207 sends a
trigger photographing signal to the industrial
linear array camera 206 after receiving the
signal, and the industrial linear array
camera 206 captures a photo and transmits
photo data to the local computer 208.

**No** — Are a preset
number of
photos captured?

**Yes**

The motion controller 207 sends
a control command to close a
top end lid of the camera dust-
proof box 110, and the ball 104
is returned to the initial position.

The local computer 208
uploads a captured photo and
photographing parameters to
an original image processing
system 301.

The original image processing system
301 processes to obtain a roller
surface point cloud data in a
prescribed format, and sends it to the
operation management system 302.

The operation management system
detects point cloud data, generates
and stores a detection result, and
sends a detection report to the user.

Does the
detection end? **No**

**Yes**

The system
shuts down.

Fig. 7

27

Fig. 8

a). First roller surface Z map (partial)     b). Second roller surface Z map (partial)

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110288545 A